# EUROPEAN PATENT SPECIFICATION

(11) **EP 4 209 959 B1**
(45) Date of publication and mention of the grant of the patent: **20.08.2025**
(21) Application number: 21863636.3
(22) Date of filing: 01.09.2021
(51) Int. Cl.: G06V 10/764, G06V 10/80

(54) **TARGET IDENTIFICATION METHOD AND APPARATUS, AND ELECTRONIC DEVICE**
ZIELIDENTIFIKATIONSVERFAHREN UND -VORRICHTUNG SOWIE ELEKTRONISCHE VORRICHTUNG
PROCÉDÉ ET APPAREIL D'IDENTIFICATION DE CIBLE, ET DISPOSITIF ÉLECTRONIQUE

(30) Priority: 02.09.2020 CN 202010910389
(43) Date of publication of application: 12.07.2023
(73) Proprietor: Hangzhou Hikvision Digital Technology Co., Ltd., Hangzhou, Zhejiang 310051 (CN)
(72) Inventor: ZHANG, Ruixuan, Hangzhou, Zhejiang 310051 (CN); ZHU, Jiang, Hangzhou, Zhejiang 310051 (CN)
(74) Representative: Goddar, Heinz J.
(86) International application number: PCT/CN2021/116042
(87) International publication number: WO 2022/048572

(56) References cited:
- CN-A- 101 388 145
- CN-A- 103 310 207
- CN-A- 103 400 157
- CN-A- 109 492 571
- CN-A- 111 414 861
- CN-A- 112 101 156
- US-A1- 2019 171 428
- US-A1- 2019 333 378
- ALEJANDRO JAIMES ET AL: "Integrating Multiple Classifiers In Visual Object Detectors Learned From User Input", 8 January 2000 (2000-01-08), pages 1 - 6, XP002540185, Retrieved from the Internet <URL:http://www.ee.columbia.edu/ln/dvmm/publications/00/ajaimes-accv2000_comb.pdf> [retrieved on 20000108]
- TARVAINEN ANTTI ET AL: "Mean teachers are better role models: Weight-averaged consistency targets improve semi-supervised deep learning results", 16 April 2018 (2018-04-16), arXiv.org, pages 1 - 16, XP055846104, Retrieved from the Internet <URL:https://arxiv.org/pdf/1703.01780.pdf> [retrieved on 20210930]

## Description

### TECHNICAL FIELD

The present disclosure relates to the field of artificial intelligence and in particular to a target identification/recognition method and apparatus, and an electronic device.

### BACKGROUND

Along with continuous progress of the society, artificial intelligent systems are applied more and more widely. At present, the artificial intelligence systems do not have sufficiently high intelligence degree and are still in a semi-automatic state and thus, human operations are required in many scenarios. For example, when an abnormality (moving target or the like) is detected, the target cannot be automatically identified/recognized without human operations.

However, because the human operations have lagging characteristics, the lagging human operations used in the artificial intelligence systems may affect an accuracy of a final artificial intelligence result.
US 2019/171428 A1 discloses automated model management methods.
Alejandro Jaimes et al.: "Integrating Multiple Classifiers In Visual Object Detectors Learned From User Input", Asian Conference on Computer Vision, 2000, discloses a hybrid classifier combination approach.
Tarvainen Antti et al.: "Mean teachers are better role models: Weight-averaged consistency targets improve semi-supervised deep learning results", 2018, discloses a method that averages model weights to form a target-generating teacher model.

### SUMMARY

The invention is defined by the method and the apparatus according to the independent claims. Preferred embodiments are defined in the dependent claims.

In the present disclosure, there is provided a target identification method and apparatus, and an electronic device, so as to improve an accuracy of a target identification result.

Specifically, the present disclosure is achieved in the following technical solution.

According to a first aspect of the present disclosure, there is provided a target identification method, which is applied to an electronic device and includes:
according to an obtained initial identification result of each target object and a configured label identification strategy, determining an identification label corresponding to each target object; where the initial identification result of the target object is obtained by inputting a target image corresponding to the target object into a trained first target identification model, and the identification label corresponding to the target object is associated with the initial identification result of the target object;
according to the target image corresponding to each target object and the identification label corresponding to each target object, re-performing model training on basis of the first target identification model to obtain a second target identification model, and when the second target identification model passes a preset performance test, updating the first target identification model to the second target identification model to perform target identification by using the updated second target identification model.

According to a second aspect of the present disclosure, there is provided a target identification apparatus, which is applied to an electronic device and includes:
an initial identification unit, configured to, according to an obtained initial identification result of each target object and a configured label identification strategy, determine an identification label corresponding to each target object; wherein the initial identification result of the target object is obtained by inputting a target image corresponding to the target object into a trained first target identification model, and the identification label corresponding to the target object is associated with the initial identification result of the target object; and
a model updating unit, configured to, according to the target image corresponding to each target object and the identification label corresponding to each target object, re-perform model training on the basis of the first target identification model to obtain a second target identification model, and when the second target identification model passes a preset performance test, update the first target identification model to the second target identification model to perform target identification by using the updated second target identification model.

According to a third aspect of the present disclosure, there is provided an electronic device, including:
a processor; and
a memory for storing instructions executable by the processor;
where the processor runs the executable instructions to perform the method in the first aspect.

In the present disclosure, the electronic device uses the initial first target identification model to perform target identification on target objects in a real-time video stream to obtain initial identification results, and then based on the initial identification results and the configured label identification strategy, determines an identification label corresponding to each target object. Subsequently, the electronic device may, according to the target image corresponding to each target object and the identification label corresponding to each target object, re-perform training on the basis of the first target identification model to obtain a second target identification model. If the second target identification model passes a preset performance test, the electronic device updates the first target identification model to the second target identification model so as to perform target identification for the target objects in the real-time video stream by using the updated second target identification model.

It can be seen from the embodiments of the present disclosure that in the present embodiment, the target identification model is not unchanged but can be updated by performing several iterations based on the target identification results generated by the target identification model and an online training method. Compared with the existing target identification model which remains unchanged once trained, the intelligence of the target identification model can be significantly improved such that target identification can be achieved without human operations, increasing the accuracy of the target identification.

Furthermore, in the present embodiment, when the target identification model is updated iteratively, human labeling is not required but online iterative updating is performed by using the target identification results generated by the target identification model, reducing human workload and improving the updating efficiency of the target identification model.

Furthermore, in an application scenario of perimeter protection, target identification is performed by using a continuously-optimized target identification model in this embodiment to avoid non-target misreporting and the like and reduce the misreporting rate of the perimeter protection.

### BRIEF DESCRIPTION OF THE DRAWINGS

To describe the technical solutions in the embodiments of the present disclosure or in the prior art more clearly, drawings required in descriptions of the embodiments of the present disclosure or the prior art will be briefly introduced below. It is apparent that the drawings described below are merely some embodiments of the present disclosure and other drawings may be obtained by those of ordinary skill in the prior art based on these drawings.
FIG. 1 is a flowchart illustrating a target identification method according to an embodiment of the present disclosure.
FIG. 2 is a flowchart illustrating another target identification method according to an embodiment of the present disclosure.
FIG. 3 is a structural schematic diagram illustrating a target identification apparatus according to an embodiment of the present disclosure.
FIG. 4 is a block diagram illustrating a target identification apparatus according to an embodiment of the present disclosure.

### DETAILED DESCRIPTION OF THE EMBODIMENTS

Exemplary embodiments will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present disclosure. Rather, they are merely examples of apparatuses and methods consistent with some aspects of the present disclosure as detailed in the appended claims.

The terms used in the present disclosure are for the purpose of describing particular embodiments only, and are not intended to limit the present disclosure. Terms determined by "a", "the" and "said" in their singular forms in the present disclosure and the appended claims are also intended to include plurality, unless clearly indicated otherwise in the context. It should also be understood that the term "and/or" as used herein refers to and includes any or all possible combinations of one or more of the associated listed items.

It is to be understood that, although the terms "first," "second," "third," and the like may be used in the present disclosure to describe various information, such information should not be limited to these terms. These terms are only used to distinguish one category of information from another. For example, without departing from the scope of the present disclosure, first information may be referred as second information; and similarly, the second information may also be referred as the first information. Depending on the context, the term "if" as used herein may be interpreted as "when" or "upon" or "in response to determining".

In some applications, when image identification is to be performed, a common method is to use a target identification model to perform target identification. But, as mentioned in the background, many of the existing target identification models have low intelligence degree, which usually leads to requirements for human intervention. For example, when an abnormality (moving target or the like) is detected, the current target identification models cannot perform further distinguishing for the moving target, for example, cannot determine whether the target is a vehicle or a leave, and thus human operations are required. However, the human operations have lagging characteristic which affects identification efficiency.

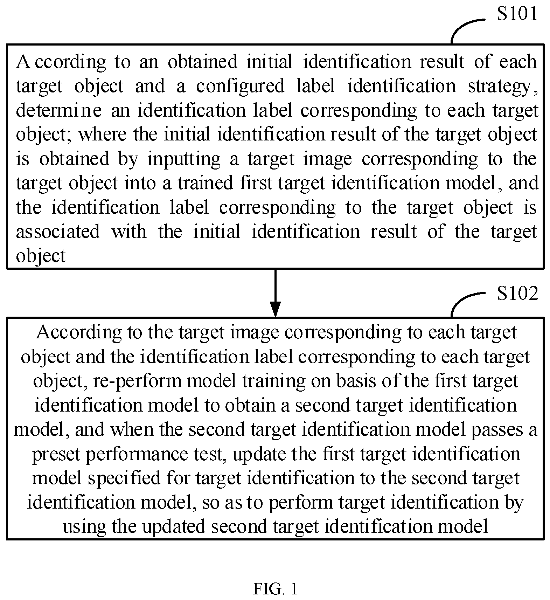

In order to solve the above shortcomings, according to an embodiment of the present disclosure, there is provided a different target identification method as shown in FIG. 1. FIG. 1 is a flowchart illustrating a target identification method according to an embodiment of the present disclosure. The method is applied to an electronic device. In an example, the electronic device may be a front-end device. In some examples, the front-end device may be an image collection device, for example, a camera or a sensor or the like. In another example, the electronic device may be a back-end device. In some examples, the back-end device may be an image processing device, for example, DVR, NVR or a management server or the like.

As shown in FIG. 1, the flow may include the following steps.

At step S101, the electronic device, according to an obtained initial identification result of each target object and a configured label identification strategy, determines an identification label corresponding to each target object; the initial identification result of the target object is obtained by inputting a target image corresponding to the target object into a trained first target identification model, and the identification label corresponding to the target object is associated with the initial identification result of the target object.

In an example, the above trained first target identification model is specified for target identification. In a specific implementation, as an embodiment, the first target identification model may be stored in a storage medium corresponding to the electronic device. As another embodiment, the first target identification model may also be stored in another device independent of the electronic device, for example, in a cloud device.

In the present embodiment, after the electronic device obtains the target images corresponding to the target objects, if the first target identification model is stored in a storage medium corresponding to the electronic device, the electronic device may directly input the target image corresponding to each target object into the trained first target identification model to obtain the initial identification result of each target object. If the first target identification model is stored in another device independent of the electronic device, for example, in a cloud device, the electronic device may send the target image corresponding to each target object to the another device storing the first target identification model, such that the another device inputs the target image corresponding to each target object into the first target identification model and returns the initial identification result of each target object to the electronic device. In this way, the electronic device can obtain the initial identification result of each target object.

It is to be noted that the electronic device can obtain the target images corresponding to the target objects in several manners, for example, the electronic device can detect a moving target object when detecting a real-time video stream, and acquire a target image corresponding to the target object when the target object triggers a preset rule, for example, acquire an image of the target object at the time of triggering the preset rule. The target image corresponding to a to-be-identified target object can be acquired by another method, which will not be specifically limited.

In the present embodiment, after the target images corresponding to the target objects are obtained, the electronic device may use the first target identification model to perform target identification for the target images. The first target identification model may be a preset trained model or a model trained and updated by the method of the present disclosure.

In some examples, the initial identification result of each target object is determined depending on a model type of the first target identification model. For example, when the first target identification model is a classification model, the initial identification result of each target object is a class of each target object. With an application to an expressway scenario as an example, the first target identification model is a classification model which can output four types of results: "vehicle", "animal", "misreported target" and "unknown target". Based on this, the initial identification result of each target object is one of the four types of results.

The label identification strategy is used to determine a target identification result of the target object. The label identification strategy can be configured based on actual requirements. The configured label identification strategy will be described below. The way that the identification label corresponding to each target object is determined based on the initial identification result corresponding to each target object and the configured label identification strategy will be described below through several embodiments.

In order to optimize the first target identification model, the electronic device may also take the target images of the above identified target objects as sample data, and based on the initial identification results and the target identification results determined based on the preset label identification strategy, automatically generate identification labels of the sample data, so as to optimize the first target identification model based on the sample data and the corresponding identification labels.

In an embodiment, in order to improve data lookup efficiency, the electronic device may perform joint storage for various types of information of a target object. The various types of information of the target object include identification label of the target object, the initial identification result of the target object, and other information of the target object (for example, target image corresponding to the target object and the like). When a target identification result of a target object is determined, joint storage may be performed for the target identification result and other information of the target object. Then, after the identification label of the target object is determined, joint storage may also be performed for the identification label of the target object and the previously-determined target identification result and the like.

For example, the electronic device may perform joint storage for the above various types of information by using a spreadsheet. For example, the target identification result of the target object, the identification label of the target object and other information of the target object may be stored in a same entry. The information such as target image may be stored in the form of link, which is not limited herein.

In another embodiment, the electronic device may also associate various types of information of the target object with an identifier of the target object. For example, after the initial identification result of the target object is determined, a correspondence between the initial identification result and the identifier of the target object may be determined; after the identification label of the target object is determined, a correspondence between the identification label and the identifier of the target object may be determined. Further, various types of information of a same target object can be queried for based on the identifier of the target object.

Only illustrative descriptions are made herein. In practical applications, the association relationship among various types of information of the target object can be determined in another manner, which will not be redundantly described.

In an embodiment, the output result of the first target identification model may further include a confidence level of a one-to-one correspondence with the initial identification result. The electronic device may determine the identification label of the target object based on the confidence level. For example, if the confidence level is higher than a preset threshold (e.g. 70%), it is considered that the initial identification result is accurate, and the electronic device may directly take the initial identification result as the identification label of the target object; if the confidence level is not higher than the preset threshold, it is considered that the initial identification result is inaccurate, and the electronic device may determine the identification label of the target object according to the initial identification result and the configured label identification strategy.

In another embodiment, the electronic device may not consider the confidence level, but for each target object, determine the identification label of the target object according to the initial identification result and the configured label identification strategy.

When determining the identification label of each target object according to the initial identification result and the configured label identification strategy, the electronic device may, for each target object, determine the target identification result of the target object based on the configured label identification strategy. When the initial identification result corresponding to the target object matches the target identification result, the initial identification result or the target identification result corresponding to the target object is determined as the identification label of the target object, and otherwise, the target identification result corresponding to the target object is determined as the identification label of the target object.

It should be noted that the electronic device may select a proper time to determine the identification label of the target object. For example, the electronic device may directly determine the identification label of the target object after obtaining the initial identification result of the target object; or, the electronic device may also store the initial identification results of a plurality of target objects and then determine the identification label of each target object based on the stored initial identification results at a given time interval or when the stored initial identification results reach a given number.

At step S102, the electronic device, according to the target image corresponding to each target object and the identification label corresponding to each target object, re-performs model training on basis of the first target identification model to obtain a second target identification model, and when the second target identification model passes a preset performance test, updates the first target identification model specified for target identification to the second target identification model to perform target identification by using the updated second target identification model.

For convenience of descriptions, the model training in step S102 may be recorded as online model training.

Compared with training the target identification model by fully relying on a huge amount of human calibrations in the prior arts, as can be seen from the step S102, performing online model training based on the identification label which corresponds to each target object and is determined according to the obtained initial identification result of each target object and the configured label identification strategy in the present embodiment can reduce the amount of the human calibrations, saving model training costs.

In an example, the electronic device may store the acquired target images corresponding to the target objects and the identification labels of the target objects determined in step S101, and take the target images and the identification labels as sample data for model training.

In another example, the electronic device may also divide the target objects into two classes based on a preset ratio. For one class, the target images and the identification labels corresponding to the target objects are taken as sample data to perform model training; for the other class, the target images and the identification labels corresponding to the target objects are taken as test data for performing performance test on the target identification model obtained by training.

After the sample data for model training is determined, if a preset trigger condition is satisfied, the electronic device may, according to the target image corresponding to each target object and the identification label corresponding to each target object, re-perform model training on the basis of the first target identification model to obtain a second target identification model.

In an example, the trigger condition may refer to whether a total number of identification labels obtained within a specified historical time period is greater than or equal to a threshold, where the specified historical time period refers to a specified time length elapsed by a current time point. The electronic device may detect the number of the identification labels obtained within the specified time length elapsed by the current time point. If the number is greater than or equal to the preset threshold, model training is performed. For example, if the current time point is July, 01, 2020, and the specified time length is one month, the electronic device may detect the number of the identification labels obtained within the time period from June, 01, 2020 to July, 01, 2020, and compare the number of the identification labels with the preset threshold.

The number of the obtained identification labels may be a number of identification labels increased within the historical time period. In an implementation, the electronic device may delete the identification labels after completing the model training, and thus the identification labels stored subsequently are newly-increased data; or, the electronic device may also number each identification label, and record a serial number segment of the identification labels used for a previous model training, and then the electronic device may determine the number of the increased identification labels based on serial numbers.

In another example, the trigger condition may also be a preset time interval, for example, model training and updating are performed in a preset period (e.g. 10 days, 30 days or the like).

Model training may also be triggered by other methods in the present disclosure, for example, triggered by hand or the like, which is not limited herein.

It can be understood that the first target identification model in the present embodiment is a model currently specified by the electronic device for target identification, for example, may be a model preset when the electronic device leaves factory, or a model updated based on the method of the present disclosure. The electronic device may use the method of the present disclosure several times to optimize the model. For example, the electronic device may periodically detect the number of the identification labels and, if the number of the increased identification labels satisfies a preset condition, may perform model updating in the flow shown in FIG. 1; or, the electronic device may periodically receive user instructions, and when receiving the user instructions, may perform model training in the flow shown in FIG. 1. More sample data may be used to perform model training in the present disclosure to achieve model optimization and increase the accuracy of the target identification.

The model training method can be referred to related technologies and will not be repeated herein.

In an embodiment, the preset performance test may be used to detect the identification accuracy of the second target identification model, and determine whether the identification accuracy of the second target identification model satisfies a preset condition.

During an accuracy test, a preset test set may be used to perform the test, where the test set includes a plurality of pairs of test data, each pair of which includes a test image and an identification label corresponding to the test image. The test data may be determined when the electronic device determines the sample data and the test data based on a ratio after storing the target objects. The target images in the test data are taken as test images and identification labels in the test data are taken as identification labels corresponding to the test images. Alternatively, the test data may also be test images pre-collected through network or monitoring device, where each test image corresponds to a human-annotated identification label.

Specifically, the accuracy test may include the following steps.

Firstly, each test image is input into the second target identification model and an identification result of the test image is determined based on the output of the second target identification model. When the test result is compared with the identification label corresponding to the test image, if both of them are consistent, it indicates that the test result is accurate.

Then, the number of the accurate test results is acquired, and then a ratio of the number of the accurate test results to a total number of the test results is taken as a target identification accuracy of the second target identification model. If the target identification accuracy is greater than a preset threshold, it is determined that the test result of the second target identification model satisfies a preset condition. If the target identification accuracy is not greater than the preset threshold, it is determined that the test result of the second target identification model does not satisfy the preset condition.

In another embodiment, the performance test may further include resource consumption at the time of model operation. For example, the electronic device may, when using a test set to perform test, detect performance use of a memory and a central processing unit (CPU) and the like of the electronic device and determine whether the performance use is less than a preset performance threshold.

The performance test of the second target identification model may further include tests of other more dimensions, for example, working efficiency and the like, which are only illustrated herein and not specifically limited.

After completing the performance test for the second target identification model, the electronic device may, based on the result of the performance test, determine whether to update the first target identification model.

If the second target identification model passes the preset performance test, the first target identification model specified for target identification is updated to the second target identification model. Subsequently, the electronic device may perform target identification by using the updated second target identification model.

If the second target identification model does not pass the preset performance test, the first target identification model is not updated but used to perform target identification.

Thus, the flow of FIG. 1 is completed. It can be known from the above descriptions that the electronic device uses the initial first target identification model to perform target identification on target objects in a real-time video stream to obtain initial identification results, and then based on the initial identification results and the configured label identification strategy, determines an identification label corresponding to each target object. Subsequently, the electronic device may, according to the target image corresponding to each target object and the identification label corresponding to each target object, re-perform training on the basis of the first target identification model to obtain a second target identification model. If the second target identification model passes the preset performance test, the electronic device updates the first target identification model to the second target identification model so as to perform target identification for the target objects in the real-time video stream by using the updated second target identification model.

It can be seen from the embodiments of the present disclosure that, in the present embodiment, the target identification model is not unchanged but can be updated by performing several iterations based on the target identification results generated by the target identification model and an online training method. Compared with the existing target identification model which remains unchanged once trained, the intelligence of the target identification model can be significantly improved such that target identification can be achieved without human operations, increasing the accuracy of the target identification.

Furthermore, in the present embodiment, when the target identification model is updated iteratively, human labeling is not required but online iterative updating is performed by using the target identification results generated by the target identification model, reducing human workload and improving the updating efficiency of the target identification model.

Furthermore, in an application scenario of perimeter protection, target identification is performed by using a continuously-optimized target identification model in this embodiment to avoid non-target misreporting and the like and reduce the misreporting rate of the perimeter protection.

How to determine the identification label corresponding to each target object according to the obtained initial identification result of each target object and the configured label identification strategy in the above step 101 will be exemplified below.

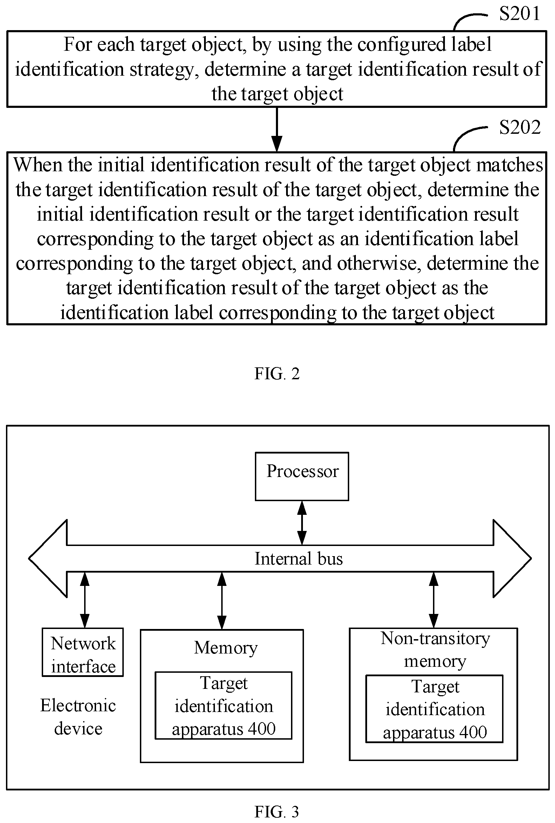

FIG. 2 is a flowchart illustrating the step 101 according to an embodiment of the present disclosure.

At step 201, for each target object, by using the configured label identification strategy, a target identification result of the target object is determined.

As mentioned above, the configured label identification strategy is used to determine the target identification result of the target object. Thus, in the step 201, the target identification result corresponding to the target object may be determined based on the configured label identification strategy. Determining the target identification result corresponding to the target object by using the configured label identification strategy will be described below by referring to a specific embodiment.

At step 202, when the initial identification result of the target object matches the target identification result of the target object, the initial identification result or the target identification result corresponding to the target object is determined as an identification label corresponding to the target object, and otherwise, the target identification result of the target object is determined as the identification label corresponding to the target object.

Based on the target identification result of the target object determined in step 201, comparison with the initial identification result of the target object obtained based on the first target identification model is performed. If the target identification result does not match the initial identification result, the target identification result is determined as the identification label of the target object.

In some examples, if the target identification result does not match the initial identification result, the identification label of the target object can be determined based on another strategy, for example, the identification label of the target object may be determined as "unknown target".

The target identification result and the initial identification result can be compared by many methods. For example, whether the target identification result and the initial identification result are consistent is determined, and if consistent, it is determined that the target identification result and the initial identification result are matched; if inconsistent, it is determined that the target identification result and the initial identification result are not matched.

Thus, the flow of FIG. 2 is completed.

In the present disclosure, the way that the electronic device determines the target identification result corresponding to the target object based on the configured label identification strategy will be described below by using specific embodiment. The electronic device may also use other methods to determine the target identification result. Illustrative descriptions are only made herein and not used to make any limitation.

### Embodiment 1

In the present embodiment 1, the configured label identification strategy refers to determining a target identification result corresponding to a target object based on a tracking result of the target object.

Based on this, in the present embodiment, the above step of determining the target identification result corresponding to the target object by using the configured label identification strategy includes the following steps.

At step a1, a tracking result of the target object is obtained, where the tracking result includes movement information of the target object.

In the present embodiment, the tracking result is a result obtained by performing tracking for the target object in a collected video stream within a specified time period, which may include the movement information of the target object, for example, movement speed and the like.

At step a2, according to the movement information of the target object in the tracking result, the target identification result corresponding to the target object is determined.

As an embodiment, different movement information may be pre-configured for different target objects in the present embodiment. With the movement information being the moving speed, the electronic device may pre-configure different movement speeds for different categories of target objects.

**Table 1**

| Categories | Movement speed |
|---|---|
| Vehicle | 30km/h~100km/h |
| Leave | 0km~5km/h |

Based on this, in the step 102, the target identification result corresponding to the target object may be determined according to the movement speed of the target object in the tracking result and the movement information of the target object in Table 1. As an embodiment, in the step 102, the movement speed of the target object in the tracking result may be compared with the movement speed in Table 1. If the movement speed of the target object in the tracking result matches the movement speed range of the target object indicated by the entry corresponding to the target object in Table 1, the initial identification result of the target object is determined as accurate, and further determined as the target identification result of the target object. If the movement speed of the target object in the tracking result does not match the movement speed range of the target object indicated by the entry corresponding to the target object in Table 1, the initial identification result of the target object is determined as inaccurate and the target identification result may be generated by another preset method.

For example, it is assumed that the initial identification result of the target object is vehicle.

It is assumed that the movement speed of the target object is 60km/h. It can be known from Table 1 that when the category is vehicle, the corresponding movement speed is 30 to 100km/h. In this case, it can be considered that the movement speed 60km/h of the target object matches the movement speed range corresponding to the category which is vehicle in Table 1. Thus, it can be directly determined that the target identification result of the target object is vehicle.

It is further assumed that the movement speed of the target object is 1km/h. It can be known from Table 1 that when the category is vehicle, the corresponding movement speed is 30 to 100km/h. In this case, it can be considered that the movement speed 1km/h of the target object does not match the movement speed range corresponding to the category which is vehicle in Table 1. In this case, it can be determined that the initial identification result of the target object is inaccurate and a target identification result is generated based on a preset method. The target identification result can be generated in many manners, for example, a category matching the movement speed is queried for in Table 1, and then the target identification result of the target object is determined as leave; or, the target identification result of the target object may be directly determined as "unknown target".

For another example, it is assumed that the initial identification result of the target object is leave.

It is assumed that the movement speed of the target object is 2km/h. It can be known from Table 1 that when the category is leave, the corresponding movement speed is 0km to 5km/h. In this case, it can be considered that the movement speed 2km/h of the target object matches the movement speed range corresponding to the category which is leave in Table 1. Thus, it can be directly determined that the target identification result of the target object is leave.

It is further assumed that the movement speed of the target object is 60km/h. It can be known from Table 1 that when the category is leave, the corresponding movement speed is 0km to 5km/h. In this case, it can be considered that the movement speed 60km/h of the target object does not match the movement speed range corresponding to the category which is leave in Table 1. In this case, it can be determined that the initial identification result of the target object is inaccurate and a target identification result is generated based on a preset method. The target identification result can be generated in many manners, for example, a category matching the movement speed is queried for in Table 1, and then the target identification result of the target object is determined as vehicle; or, the target identification result of the target object may be directly determined as "unknown target".

Thus, the descriptions of the embodiment 1 are completed.

### Embodiment 2

In the present embodiment 2, the configured label identification strategy refers to determining the target identification result corresponding to the target object by using the identification result of another specified model.

Based on this, in the present embodiment, the above step of determining the target identification result corresponding to the target object by using the configured label identification strategy includes the following steps.

At step b1, identification is performed for the target object by using at least one trained specified model to obtain at least one reference identification result.

In the present embodiment, the at least one trained specified model may be pre-stored in a device storage medium by the electronic device, or acquired by the electronic device through network based on actual requirements. The electronic device may input the target image of the target object into at least one specified model and based on an output result of each specified model, determine a reference identification result corresponding to the specified model.

At step b2, one of all the obtained reference identification results is determined as the target identification result corresponding to the target object, where the one of all the obtained reference identification results has a largest proportion in all the obtained reference identification results.

In the present embodiment, based on at least one reference identification result corresponding to at least one specified model obtained in step b1, the target identification result is determined.

In an example, the reference identification result having the largest proportion in the reference identification results is taken as the target identification result. For example, four specified models are used and the reference identification result of each specified model is obtained, where in the four reference identification results, one result indicates the target object is leave, three results indicate the target object is vehicle. In this case, it can be determined that the reference identification result having the largest proportion indicates the target object is vehicle, and thus, the target identification result of the target object is determined as vehicle.

In another example, the target identification result may be determined based on a result of comparing the reference identification results of the target object with the initial identification result. For example, a number of the reference identification results consistent with the initial identification result in the reference identification results is determined, and then a proportion of the number of the reference identification results consistent with the initial identification result in the reference identification results is calculated. If the proportion is greater than a preset proportion threshold, it is determined that the target identification result of the target object is the initial identification result. If the proportion is not greater than the preset proportion threshold, the target identification result can be determined by other methods, for example, the reference identification result having the largest proportion in the reference identification results is taken as the target identification result.

For example, it is assumed that the initial identification result indicates the target object is leave. In four reference identification results obtained by four specified models, one reference identification result indicates the target object is leave, two reference identification results indicate the target object is vehicle, and one reference identification result indicates the target object is misreported. Hence, it may be determined that, in the four reference identification results, there is a total of one consistent with the initial identification result, accounting for 25%. If the preset proportion threshold is 75%, the proportion is not greater than the preset proportion threshold. In this case, the electronic device may use another method to determine the target identification result, for example, take the "vehicle" having the largest proportion in the reference identification results as the target identification result.

Thus, the descriptions of the embodiment 2 are completed.

### Embodiment 3

In the embodiment 3, the configured label identification strategy is to determine the target identification result of the target object by clustering.

Based on this, in the present embodiment, the above step of, for each target object, determining the target identification result corresponding to the target object by using the configured label identification strategy includes the following steps.

At step c1, each target object is clustered by a preset clustering method.

In the present embodiment, the target object may be clustered in many manners, for example, after the target image corresponding to the target object is converted into an image vector, the target object is clustered based on the image vector.

It should be noted that the target image can be converted into the image vector in many manners, for example, graph embedding may be performed for the target object based on an algorithm such as graph2vec and Node2vec and the like to obtain the image vector corresponding to the target image.

The image vector can be clustered in many manners, for example, based on an algorithm such as K-means algorithm, Gaussian Mixture Model (GMM) algorithm and the like.

In the present disclosure, another method may also be used to cluster the target object, which will not be repeated herein.

Based on the preset clustering method, a plurality of target objects can be divided into several classes, each of which includes at least one target object. For example, if there are 1000 to-be-processed target objects, the 1000 target objects can be divided into four classes based on the image vectors of the target objects, each of which includes at least one target object.

At step c2, for a first target object in each class, a specified label of a second target object in the class is determined as a target identification result of the first target object.

In the present embodiment, the first target object is an object without a specified label; the second target object is an object with a specified label, and a same label is specified for different second target objects in a same class.

In the present embodiment, for each class formed by clustering, a plurality of second target objects may be screened out therefrom and then displayed to a user through a visual interface, and further, the specified label determined by the user for the second target objects is acquired.

In an example, the second target object may be a target object having a shortest distance from a clustering center. In an implementation, the electronic device may determine the clustering center of each class based on the clustering result, and then calculate a distance of each target object from the clustering center, and then take the target object having the smallest distance value as the second target object. After one second target object in each class is determined, the second target object may be displayed through the visual interface of the electronic device, such that the user determines a specified label for the second target object. Then, the electronic device may take the specified label as the target identification result of the first target object in the class.

For the second target object, the specified label of the second target object may be directly taken as the target identification result.

For example, the 1000 target objects may be divided into four classes based on K-means clustering algorithm, which includes the following steps.

Firstly, four target objects are randomly selected as center points from the 1000 target objects; then, for each of the remaining 996 target objects other than the center points, distances of the target object from the four center points are calculated (e.g. Euclidean distance and cosine distance and the like) to determine a center point with the smallest distance value, and assign the target object to a set to which the center point with the smallest distance value belongs. Next, for four sets formed by division, a center point of each set is re-calculated, for example, an average value of the target objects in the set is taken as a center point, where the average value of the target objects refers to an average value of the image vectors corresponding to the target objects in each dimension; the above steps are repeated until the determined center point satisfies a preset condition (for example, a distance between the newly-determined center point and the previously-determined center point is less than a preset threshold). Thus, the clustering is ended.

In the above steps, the 1000 target objects may be divided into four classes, and a center point determined for each class in the last clustering is taken as the clustering center of the class. It can be understood that the center point may be an average value obtained by calculation and does not represent any target object.

For the four classes formed by division, a distance of each target object in classes from the clustering center is re-calculated, and the target object having the shortest distance from the clustering center is determined as the second target object, and thus four second target objects can be obtained. Then, the four second target objects may be displayed to the user and specified labels determined by the user are acquired and then taken as the target identification results of the first target objects in the classes. For example, if the specified label determined by the user for the second target object in the first class is vehicle, the target identification result of the first target object in the first class is determined as vehicle.

It can be understood that, during implementation of the above clustering algorithm, specific calculations can be performed by using the image vectors of the target objects and the obtained center points may also be expressed as vectors, which will not be repeated herein.

In another example, the second target object may include a plurality of target objects selected randomly from each class. For each class formed by division, the electronic device may randomly select a plurality of target objects as the second target objects from the class and acquire the specified labels determined by the user for the second target objects. Generally, in a case of accurate clustering result, the specified labels of the second target objects in each class are same. Next, for each class, the specified label of the second target objects in the class is taken as the target identification result of the first target objects. Taking the above 1000 target objects as an example, the 1000 target objects are divided into four classes, and then a plurality of target objects are randomly selected as the second target objects from each class, and then the specified label determined by the user for the second target objects is acquired, and then the specified label is taken as the target identification result of the first target objects in the class.

If the clustering result has a large error, the specified labels of the second target objects selected from a same class may be different. Based on this, the electronic device may use another manner to determine the target identification result. Alternatively, the electronic device may also re-select the second target objects and re-determine the specified labels and the like. Alternatively, in the present embodiment, another method may be used to solve the problem of different specified labels of the second target objects in a same class. Illustrative descriptions are only made herein and shall not be used to make any limitation.

Thus, the descriptions of the embodiment 3 are completed. It can be understood that in the present embodiment, although the user is required to determine the specified label for the second target objects, the number of the second target objects is far less than the number of the target objects with the target identification results to be determined. Thus, in the present embodiment, based on a small number of specified labels, the identification results of a large number of target objects can be determined. Compared with human labeling for each target object, human workload is reduced and the working efficiency is increased in the present embodiment.

### Embodiment 4

In the present embodiment 4, the configured label identification strategy is to determine the target identification result corresponding to the target object based on a similarity between images.

Based on this, in the present embodiment, the above step of, for each target object, determining the target identification result of the target object by using the configured label identification strategy includes the following steps.

At step d1, all target objects are divided into first-class target objects and second-class target objects; where the first-class target objects include at least one first target object which is an object without a specified label; the second-class target objects include at least one second target object which is an object with a specified label;

In the present embodiment, the target objects are divided into two classes based on whether labels are specified for the target objects, that is, the objects without specified labels are assigned to the first-class target objects which include at least one first target object, and the objects with specified labels are assigned to the second-class target objects which include at least one second target object.

In an embodiment, the specified labels of the second target objects may be determined by the user. For example, a given number or a given proportion of target objects may be selected randomly and displayed to the user through the visual interface of the electronic device, and further, the specified labels determined for these target objects by the user are acquired.

In some examples, the second-class target objects may include at least a plurality of different second target objects which may include the second target objects with different specified labels, or may include the second target objects with a same specified label, or may include the second target objects with different specified labels and the second target objects with a same specified label.

At step d2, for each first target object, a similarity between the first target object and each second target object in the second-class target objects is determined, and based on the similarity between the first target object and each second target object in the second-class target objects, a specified label of one second target object is selected and determined as a target identification result of the first target object.

In the present embodiment, for each first target object, the similarity between the first target object and each second target object in the second-class target objects may be determined.

As an embodiment, the target images corresponding to the target objects may be converted into image vectors, and then the similarity between the target objects is determined based on a distance between the image vectors, where the similarity is positively correlated with the distance.

It should be noted that the way that the target images are converted into image vectors is the same as in the embodiment 3 and will not be repeated herein. The distance between image vectors can be determined in many manners, for example, Euclidean distance or Manhattan distance or the like between image vectors can be calculated, which is not limited herein.

For example, the second target objects include G1, G2 and G3. For a first target object P1, similarities S11, S12 and S13 between the P1 and the G1, the P1 and the G2, the P1 and the G3 can be determined respectively based on the distance between image vectors.

In the present embodiment, based on the determined similarity between the first target object and each second target object, one second target object is selected, and the specified label of the selected second target object is determined as the target identification result of the first target object. In some examples, when the second target object is selected, a second target object with a highest similarity may be selected, or a second target object is selected randomly from the second target objects with similarities exceeding a preset similarity threshold, or the like.

In the present embodiment, based on the determined second target object, the specified label corresponding to the second target object is determined as the target identification result of the first target object.

Still taking the above first target object P1 as an example, one second target object may be selected based on a preset manner. For example, the second target object G1 is selected, and the specified label of the G1 may be determined as the target identification result of the P1. For example, if the specified label of the G1 is vehicle, it is determined that the target identification result of the P1 is vehicle.

Thus, the descriptions of the embodiment 4 are completed.

It can be understood that the above four embodiments are implementations for determining the target identification result illustrated in the present disclosure. In practical applications, expansion may be performed based on the above embodiments, or combination may be performed for several of the above embodiments. No redundant descriptions are made herein.

With the electronic device as a management server, the following descriptions are made to the use of the method of the present disclosure in the perimeter protection application.

In the perimeter protection application, for an acquired video stream, a target object in the video stream is firstly detected and tracked. If a moving target object triggers a preset rule, a target image corresponding to the moving target object is extracted from the video stream, and target identification is performed for the moving target object based on the target image.

For example, the user may dispose a perimeter protection for an "emergency lane" on an expressway. Firstly, a real-time video steam may be detected and the target objects are extracted from the single-frame image of the video stream, where the target objects include still or dynamic targets, for example, vehicles and road signs and the like are box-selected from the image. Then, the extracted target objects are tracked in the subsequent image frames of the above single-frame image to screen out a moving target object therein; next, during a tracking process, whether the moving target object triggers the preset rule is determined, for example, whether the target object crosses the boundary of the above "emergency lane" is determined. If the target object triggers the preset rule, the target image containing the target object is extracted.

Based on the above extracted target image corresponding to the target object, target identification may be performed by the method of the present disclosure. With the target object as a target object A, the flow may include the following steps.

Firstly, the electronic device inputs a target image corresponding to the target object A into the first target identification model to obtain an initial identification result of the target object as vehicle.

Then, the electronic device, based on the preset label identification strategy, determines a target identification result of the target object A as vehicle.

Next, the electronic device compares the target identification result and the initial identification result of the target object A and determines the target identification result and the initial identification result are matched for both of them indicate vehicle, and determines an identification label of the target object A as vehicle.

The above steps are repeated until the electronic device determines a total number of newly-determined identification labels in a current period is greater than a threshold. In this case, on the basis of the first target identification model, model training is re-performed by using the target images and the identification labels corresponding to these target objects to obtain a second target identification model.

Then, by using the preset performance test method, for example, test is performed for the identification accuracy of the second target identification model. If a preset condition is satisfied, the first target identification model is updated to the second target identification model.

Afterwards, the electronic device may use the second target identification model to perform target identification on the target objects in the real-time video stream.

Thus, the flow of use, by the electronic device, of the method of the present disclosure in the perimeter protection application is completed.

Corresponding to the above embodiments of the target identification method, an embodiment of a target identification apparatus is further provided.

The embodiments of the target identification apparatus in the present disclosure may be applied to an electronic device. The apparatus embodiments may be implemented by software or by hardware or by combination of hardware and software. With implementation by software as an example, as a logic apparatus, it is formed by reading corresponding computer program instructions in a non-transitory memory into a memory for running by a processor of the electronic device where the apparatus is located. From the hardware level, as shown in FIG. 3, it shows a hardware structure diagram of an electronic device where the target identification apparatus in the present disclosure is located. In addition to the processor, the memory, the network interface and the non-transitory memory shown in FIG. 3, the electronic device where the apparatus is located in the embodiments usually further includes other hardware based on actual functions of the electronic device, which is not redundantly described herein.

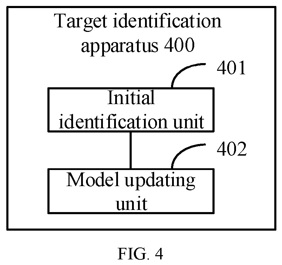

FIG. 4 is a block diagram illustrating a target identification apparatus according to an embodiment of the present disclosure.

As shown in FIG. 4, the a target identification apparatus 400 may be applied to the electronic device shown in FIG. 3 and include:
an initial identification unit 401, configured to, according to an obtained initial identification result of each target object and a configured label identification strategy, determine an identification label corresponding to each target object; wherein the initial identification result of the target object is obtained by inputting a target image corresponding to the target object into a trained first target identification model, and the identification label corresponding to the target object is associated with the initial identification result of the target object; and
a model updating unit 402, configured to, according to the target image corresponding to each target object and the identification label corresponding to each target object, re-perform model training on the basis of the first target identification model to obtain a second target identification model, and when the second target identification model passes a preset performance test, update the first target identification model to the second target identification model to perform target identification by using the updated second target identification model.

In some examples, according to the obtained initial identification result of each target object and the configured label identification strategy, determining the identification label corresponding to each target object includes:
for each target object, by using the configured label identification strategy, determining a target identification result of the target object; and
when the initial identification result of the target object matches the target identification result of the target object, determining the initial identification result or the target identification result of the target object as an identification label corresponding to the target object, and otherwise, determining the target identification result of the target object as the identification label corresponding to the target object.

In some examples, by using the configured label identification strategy, determining the target identification result of the target object includes:
obtaining a tracking result of the target object, wherein the tracking result includes movement information of the target object; and
according to the movement information of the target object in the tracking result, determining the target identification result of the target object.

In some examples, by using the configured label identification strategy, determining the target identification result of the target object includes:
performing identification for the target object by using at least one trained specified model to obtain at least one reference identification result; and
determining one of all the obtained reference identification results as the target identification result of the target object, wherein the one of all the obtained reference identification results has a largest proportion in all the obtained reference identification results.

In some examples, for each target object, by using the configured label identification strategy, determining the target identification result of the target object includes:
based on a preset clustering manner, performing clustering for each target object; for each first target object in each class, determining a specified label of a second target object in the class as a target identification result of the first target object; where the first target object is an object without a specified label; the second target object is an object with a specified label, and a same label is specified for different second target objects in a same class.

In some examples, for each target object, by using the configured label identification strategy, determining the target identification result of the target object includes:
dividing all target objects into first-class target objects and second-class target objects; wherein the first-class target objects include at least one first target object which is an object without a specified label; the second-class target objects include at least one second target object which is an object with a specified label; and
for each first target object, determining a similarity between the first target object and each second target object in the second-class target objects, and based on the similarity between the first target object and each second target object in the second-class target objects, selecting a specified label of one second target object as a target identification result of the first target object.

In some examples, the second-class target objects include at least a plurality of second target objects,
where different labels are specified for at least two different second target objects in the second-class target objects, and/or, a same label is specified for at least two different second target objects in the second-class target objects.

In some examples, before being used to re-perform model training on the basis of the first target identification model according to the target image corresponding to each target object and the identification label corresponding to each target object, the initial identification unit is further configured to:
detect whether a total number of identification labels obtained within a specified historical time period is greater than or equal to a preset threshold; if the total number of identification labels obtained within the specified historical time period is greater than or equal to the preset threshold, continue re-performing model training on the basis of the first target identification model according to the target image corresponding to each target object and the identification label corresponding to each target object; wherein the specified historical time period refers to a time period with a specified time length elapsed by a current time point.

Details of the implementation process of the functions and effects of different units in the above-described apparatus may be referred to the implementation process of corresponding steps in the above-described method and will not be redundantly described herein.

Since the apparatus embodiments substantially correspond to the method embodiments, a reference may be made to part of the descriptions of the method embodiments for the related part. The apparatus embodiments described above are merely illustrative, where the units described as separate members may be or not be physically separated, and the members displayed as units may be or not be physical units, i.e., may be located in one place, or may be distributed to a plurality of network units. Part or all of the modules may be selected according to actual requirements to implement the objectives of the solutions in the embodiments. Those of ordinary skill in the art may understand and carry out them without creative work.

The systems, apparatuses, modules or units described in the above embodiments may be specifically implemented by a computer chip or an entity or may be implemented by a product with a particular function. A typical implementing device may be a computer and the computer may be specifically a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

Corresponding to the above embodiments of the target identification method, an electronic device, which includes a processor and a memory storing machine executable instructions is further provided. The processor and the memory usually are connected mutually via an internal bus. In other possible implementations, the device may further include an external interface to communicate with other devices or components.

In the present embodiment, by reading and executing the machine executable instructions corresponding to the target identification logic and stored in the memory, the processor is caused to:
according to an obtained initial identification result of each target object and a configured label identification strategy, determine an identification label corresponding to each target object; where the initial identification result of the target object is obtained by inputting a target image corresponding to the target object into a trained first target identification model, and the identification label corresponding to the target object is associated with the initial identification result of the target object;
according to the target image corresponding to each target object and the identification label corresponding to each target object, re-perform model training on basis of the first target identification model to obtain a second target identification model, and when the second target identification model passes a preset performance test, update the first target identification model to the second target identification model to perform target identification by using the updated second target identification model.

In some examples, according to the obtained initial identification result of each target object and the configured label identification strategy, determining the identification label corresponding to each target object includes:
for each target object,
by using the configured label identification strategy, determining a target identification result of the target object; and
when the initial identification result of the target object matches the target identification result of the target object, determining the initial identification result or the target identification result of the target object as an identification label corresponding to the target object, and otherwise, determining the target identification result of the target object as the identification label corresponding to the target object.

In some examples, by using the configured label identification strategy, determining the target identification result of the target object includes:
obtaining a tracking result of the target object, wherein the tracking result comprises movement information of the target object; and
according to the movement information of the target object in the tracking result, determining the target identification result of the target object.

In some examples, by using the configured label identification strategy, determining the target identification result of the target object includes:
performing identification for the target object by using at least one trained specified model to obtain at least one reference identification result; and
determining one of all the obtained reference identification results as the target identification result of the target object, where the one of all the obtained reference identification results has a largest proportion in all the obtained reference identification results.

In some examples, for each target object, by using the configured label identification strategy, determining the target identification result of the target object includes:
based on a preset clustering manner, performing clustering for each target object; for each first target object in each class, determining a specified label of a second target object in the class as a target identification result of the first target object; where the first target object is an object without a specified label; the second target object is an object with a specified label, and a same label is specified for different second target objects in a same class.

In some examples, for each target object, by using the configured label identification strategy, determining the target identification result of the target object includes:
dividing all target objects into first-class target objects and second-class target objects; where the first-class target objects include at least one first target object which is an object without a specified label; the second-class target objects include at least one second target object which is an object with a specified label; and
for each first target object, determining a similarity between the first target object and each second target object in the second-class target objects, and based on the similarity between the first target object and each second target object in the second-class target objects, selecting a specified label of one second target object as a target identification result of the first target object.

In some examples, the second-class target objects include at least a plurality of second target objects,
where different labels are specified for at least two different second target objects in the second-class target objects, and/or, a same label is specified for at least two different second target objects in the second-class target objects.

In some examples, before, according to the target image corresponding to each target object and the identification label corresponding to each target object, re-performing model training on the basis of the first target identification model, the method further includes:
detecting whether a total number of identification labels obtained within a specified historical time period is greater than or equal to a preset threshold; if the total number of identification labels obtained within the specified historical time period is greater than or equal to the preset threshold, continuing re-performing model training on the basis of the first target identification model according to the target image corresponding to each target object and the identification label corresponding to each target object; where the specified historical time period refers to a time period with a specified time length elapsed by a current time point.

Therefore, the specific embodiments of the present disclosure are already described, and other embodiments are within the scope of the appended claims. In some cases, actions or steps recorded in the claims may be performed in an order different from the embodiments to achieve the desired result. In addition, the process described in the drawings is not necessarily performed in the shown specific order or in sequence, so as to achieve the desired result. In some implementations, multi-task processing and parallel processing may be advantageous.

The foregoing disclosure is merely illustrative of preferred embodiments of the present disclosure but not intended to limit the present disclosure, and any modifications, equivalent substitutions and improvements thereof made within the scope of the claims shall be encompassed in the scope of protection of the present disclosure.

## Claims

1. A target identification method, **characterized by** comprising:
according to an obtained initial identification result of each target object and a configured label identification strategy, determining (S101), by an electronic device, an identification label corresponding to each target object; wherein the initial identification result of the target object is obtained by inputting a target image corresponding to the target object into a trained first target identification model, and the identification label corresponding to the target object is associated with the initial identification result of the target object;
according to the target image corresponding to each target object and the identification label corresponding to each target object, re-performing (S102), by the electronic device, model training on the first target identification model to obtain a second target identification model, and when the second target identification model passes a preset performance test, updating the first target identification model to the second target identification model to perform target identification by using the updated second target identification model;
wherein according to the obtained initial identification result of each target object and the configured label identification strategy, determining the identification label corresponding to each target object comprises:
for each target object, by using the configured label identification strategy, determining (S201) a target identification result of the target object; and
when the initial identification result of the target object matches the target identification result of the target object, determining the initial identification result as accurate and determining (S202) the initial identification result or the target identification result of the target object as an identification label corresponding to the target object, and otherwise, determining the initial identification result as inaccurate and determining the target identification result of the target object as the identification label corresponding to the target object;
wherein the configured label identification strategy, comprises any one of:
determining the target identification result of the target object based on a tracking result of the target object,
determining the target identification result of the target object based on identification results of other specified models,
determining the target identification result of the target object based on a clustering manner; or
determining the target identification result of the target object based a similarity between the target images.

2. The method of claim 1, wherein by using the configured label identification strategy, determining the target identification result of the target object comprises:
obtaining a tracking result of the target object, wherein the tracking result comprises movement information of the target object; and
according to the movement information of the target object in the tracking result, determining the target identification result of the target object.

3. The method of claim 1, wherein by using the configured label identification strategy, determining the target identification result of the target object comprises:
performing identification for the target object by using at least one trained specified model to obtain at least one reference identification result; and
determining one of all the obtained at least one reference identification result as the target identification result of the target object, wherein the one of all the obtained at least one reference identification result has a largest proportion in all the obtained at least one reference identification result.

4. The method of claim 1, wherein for each target object, by using the configured label identification strategy, determining the target identification result of the target object comprises:
based on a preset clustering manner, performing clustering for each target object; for each first target object in each class, determining a specified label of a second target object in the class as a target identification result of the first target object; wherein the first target object is an object without a specified label; the second target object is an object with a specified label, and a same label is specified for different second target objects in a same class.

5. The method of claim 1, wherein for each target object, by using the configured label identification strategy, determining the target identification result of the target object comprises:
dividing all target objects into first-class target objects and second-class target objects; wherein the first-class target objects comprise at least one first target object which is an object without a specified label; the second-class target objects comprise at least one second target object which is an object with a specified label; and
for each first target object, determining a similarity between the first target object and each of the at least one second target object in the second-class target objects, and based on the similarity between the first target object and each of the at least one second target object in the second-class target objects, selecting a specified label of one of the at least one second target object as a target identification result of the first target object.

6. The method of claim 5, wherein the second-class target objects comprise at least a plurality of second target objects,
wherein different labels are specified for at least two different second target objects in the second-class target objects, and/or, a same label is specified for at least two different second target objects in the second-class target objects.

7. The method of claim 1, wherein before, according to the target image corresponding to each target object and the identification label corresponding to each target object, re-performing model training on the first target identification model, the method further comprises:
detecting whether a total number of identification labels obtained within a specified historical time period is greater than or equal to a preset threshold; if the total number of identification labels obtained within the specified historical time period is greater than or equal to the preset threshold, continuing re-performing model training on the first target identification model according to the target image corresponding to each target object and the identification label corresponding to each target object; wherein the specified historical time period refers to a time period with a specified time length elapsed by a current time point.

8. A target identification apparatus (400), **characterized by** comprising:
an initial identification unit (401), configured to, according to an obtained initial identification result of each target object and a configured label identification strategy, determine an identification label corresponding to each target object; wherein the initial identification result of the target object is obtained by inputting a target image corresponding to the target object into a trained first target identification model, and the identification label corresponding to the target object is associated with the initial identification result of the target object; and
a model updating unit (402), configured to, according to the target image corresponding to each target object and the identification label corresponding to each target object, re-perform model training on the first target identification model to obtain a second target identification model, and when the second target identification model passes a preset performance test, update the first target identification model to the second target identification model to perform target identification by using the updated second target identification model;
wherein according to the obtained initial identification result of each target object and the configured label identification strategy, determining the identification label corresponding to each target object comprises:
for each target object,
by using the configured label identification strategy, determining a target identification result of the target object; and
when the initial identification result of the target object matches the target identification result of the target object, determining the initial identification result as accurate and determining the initial identification result or the target identification result of the target object as an identification label corresponding to the target object, and otherwise, determining the initial identification result as inaccurate and determining the target identification result of the target object as the identification label corresponding to the target object;
wherein the configured label identification strategy, comprises any one of:
determining the target identification result of the target object based on a tracking result of the target object,
determining the target identification result of the target object based on identification results of other specified models,
determining the target identification result of the target object based on a clustering manner; or
determining the target identification result of the target object based a similarity between the target images.

9. The apparatus of claim 8, wherein by using the configured label identification strategy, determining the target identification result of the target object comprises:
obtaining a tracking result of the target object, wherein the tracking result comprises movement information of the target object; and
according to the movement information of the target object in the tracking result, determining the target identification result of the target object, or
wherein by using the configured label identification strategy, determining the target identification result of the target object comprises:
performing identification for the target object by using at least one trained specified model to obtain at least one reference identification result; and
determining one of all the obtained at least one reference identification result as the target identification result of the target object, wherein the one of all the obtained at least one reference identification result has a largest proportion in all the obtained at least one reference identification result.

10. The apparatus of claim 8, wherein for each target object, by using the configured label identification strategy, determining the target identification result of the target object comprises:
based on a preset clustering manner, performing clustering for each target object; for each first target object in each class, determining a specified label of a second target object in the class as a target identification result of the first target object; wherein the first target object is an object without a specified label; the second target object is an object with a specified label, and a same label is specified for different second target objects in a same class.

11. The apparatus of claim 8, wherein for each target object, by using the configured label identification strategy, determining the target identification result of the target object comprises:
dividing all target objects into first-class target objects and second-class target objects; wherein the first-class target objects comprise at least one first target object which is an object without a specified label; the second-class target objects comprise at least one second target object which is an object with a specified label; and
for each first target object, determining a similarity between the first target object and each of the at least one second target object in the second-class target objects, and based on the similarity between the first target object and each of the at least one second target object in the second-class target objects, selecting a specified label of one of the at least one second target object as a target identification result of the first target object.

12. The apparatus of claim 11, wherein the second-class target objects comprise at least a plurality of second target objects,
wherein different labels are specified for at least two different second target objects in the second-class target objects, and/or, a same label is specified for at least two different second target objects in the second-class target objects.

13. The apparatus of claim 8, wherein before being used to re-perform model training on the first target identification model according to the target image corresponding to each target object and the identification label corresponding to each target object, the initial identification unit is further configured to:
detect whether a total number of identification labels obtained within a specified historical time period is greater than or equal to a preset threshold; if the total number of identification labels obtained within the specified historical time period is greater than or equal to the preset threshold, continue re-performing model training on the first target identification model according to the target image corresponding to each target object and the identification label corresponding to each target object; wherein the specified historical time period refers to a time period with a specified time length elapsed by a current time point.

## Patentansprüche

1. Zielidentifikationsverfahren, **dadurch gekennzeichnet, dass** es folgende Schritte umfasst:
gemäß einem erhaltenen anfänglichen Identifikationsergebnis jedes Zielobjekts und einer konfigurierten Etikettenidentifikationsstrategie, Bestimmen (S101), durch eine elektronische Vorrichtung, eines Identifikationsetiketts, das jedem Zielobjekt entspricht; wobei das anfängliche Identifikationsergebnis des Zielobjekts durch Eingabe eines Zielbilds, das dem Zielobjekt entspricht, in ein trainiertes erstes Zielidentifikationsmodell erhalten wird, und das Identifikationsetikett, das dem Zielobjekt entspricht, dem anfänglichen Identifikationsergebnis des Zielobjekts zugeordnet ist;
gemäß dem Zielbild, das jedem Zielobjekt entspricht, und dem Identifikationsetikett, das jedem Zielobjekt entspricht, erneutes Durchführen (S102), durch die elektronische Vorrichtung, eines Modelltrainings an dem ersten Zielidentifikationsmodell, um ein zweites Zielidentifikationsmodell zu erhalten, und wenn das zweite Zielidentifikationsmodell einen voreingestellten Leistungstest besteht, Aktualisieren des ersten Zielidentifikationsmodells auf das zweite Zielidentifikationsmodell, um eine Zielidentifikation unter Verwendung des aktualisierten zweiten Zielidentifikationsmodells durchzuführen;
wobei gemäß dem erhaltenen anfänglichen Identifikationsergebnis jedes Zielobjekts und der konfigurierten Etikettenidentifikationsstrategie das Bestimmen des Identifikationsetiketts, das jedem Zielobjekt entspricht, umfasst:
für jedes Zielobjekt, unter Verwendung der konfigurierten Etikettenidentifikationsstrategie, Bestimmen (S201) eines Zielidentifikationsergebnisses des Zielobjekts; und
wenn das anfängliche Identifikationsergebnis des Zielobjekts mit dem Zielidentifikationsergebnis des Zielobjekts übereinstimmt, Bestimmen des anfänglichen Identifikationsergebnisses als genau und Bestimmen (S202) des anfänglichen Identifikationsergebnisses oder des Zielidentifikationsergebnisses des Zielobjekts als ein Identifikationsetikett, das dem Zielobjekt entspricht, und andernfalls Bestimmen des anfänglichen Identifikationsergebnisses als ungenau und Bestimmen des Zielidentifikationsergebnisses des Zielobjekts als das Identifikationsetikett, das dem Zielobjekt entspricht;
wobei die konfigurierte Etikettenidentifikationsstrategie einen der folgenden Schritte umfasst:
Bestimmen des Zielidentifikationsergebnisses des Zielobjekts basierend auf einem Verfolgungsergebnis des Zielobjekts,
Bestimmen des Zielidentifikationsergebnisses des Zielobjekts basierend auf Identifikationsergebnissen anderer spezifizierter Modelle,
Bestimmen des Zielidentifikationsergebnisses des Zielobjekts basierend auf einer Clusteringweise; oder
Bestimmen des Zielidentifikationsergebnisses des Zielobjekts basierend auf einer Ähnlichkeit zwischen den Zielbildern.

2. Verfahren nach Anspruch 1, wobei unter Verwendung der konfigurierten Etikettenidentifikationsstrategie das Bestimmen des Zielidentifikationsergebnisses des Zielobjekts umfasst:
Erhalten eines Verfolgungsergebnisses des Zielobjekts, wobei das Verfolgungsergebnis Bewegungsinformationen des Zielobjekts umfasst; und
gemäß den Bewegungsinformationen des Zielobjekts in dem Verfolgungsergebnis, Bestimmen des Zielidentifikationsergebnisses des Zielobjekts.

3. Verfahren nach Anspruch 1, wobei unter Verwendung der konfigurierten Etikettenidentifikationsstrategie das Bestimmen des Zielidentifikationsergebnisses des Zielobjekts umfasst:
Durchführen einer Identifikation für das Zielobjekt unter Verwendung mindestens eines trainierten spezifizierten Modells, um mindestens ein Referenzidentifikationsergebnis zu erhalten; und
Bestimmen eines von allen erhaltenen mindestens einen Referenzidentifikationsergebnissen als das Zielidentifikationsergebnis des Zielobjekts, wobei das eine von allen erhaltenen mindestens einen Referenzidentifikationsergebnissen einen größten Anteil in allen erhaltenen mindestens einen Referenzidentifikationsergebnissen aufweist.

4. Verfahren nach Anspruch 1, wobei für jedes Zielobjekt, unter Verwendung der konfigurierten Etikettenidentifikationsstrategie, das Bestimmen des Zielidentifikationsergebnisses des Zielobjekts umfasst:
basierend auf einer voreingestellten Clusteringweise, Durchführen eines Clustering für jedes Zielobjekt; für jedes erste Zielobjekt in jeder Klasse, Bestimmen eines spezifizierten Etiketts eines zweiten Zielobjekts in der Klasse als ein Zielidentifikationsergebnis des ersten Zielobjekts; wobei das erste Zielobjekt ein Objekt ohne ein spezifiziertes Etikett ist; das zweite Zielobjekt ein Objekt mit einem spezifizierten Etikett ist und ein gleiches Etikett für verschiedene zweite Zielobjekte in einer gleichen Klasse spezifiziert ist.

5. Verfahren nach Anspruch 1, wobei für jedes Zielobjekt, unter Verwendung der konfigurierten Etikettenidentifikationsstrategie, das Bestimmen des Zielidentifikationsergebnisses des Zielobjekts umfasst:
Aufteilen aller Zielobjekte in Zielobjekte der ersten Klasse und Zielobjekte der zweiten Klasse; wobei die Zielobjekte der ersten Klasse mindestens ein erstes Zielobjekt umfassen, das ein Objekt ohne ein spezifiziertes Etikett ist; die Zielobjekte der zweiten Klasse mindestens ein zweites Zielobjekt umfassen, das ein Objekt mit einem spezifizierten Etikett ist; und
für jedes erste Zielobjekt, Bestimmen einer Ähnlichkeit zwischen dem ersten Zielobjekt und jedem des mindestens einen zweiten Zielobjekts in den Zielobjekten der zweiten Klasse, und basierend auf der Ähnlichkeit zwischen dem ersten Zielobjekt und jedem des mindestens einen zweiten Zielobjekts in den Zielobjekten der zweiten Klasse, Auswählen eines spezifizierten Etiketts eines des mindestens einen zweiten Zielobjekts als ein Zielidentifikationsergebnis des ersten Zielobjekts.

6. Verfahren nach Anspruch 5, wobei die Zielobjekte der zweiten Klasse mindestens eine Mehrzahl von zweiten Zielobjekten umfassen,
wobei unterschiedliche Etiketten für mindestens zwei unterschiedliche zweite Zielobjekte in den Zielobjekten der zweiten Klasse spezifiziert sind, und/oder ein gleiches Etikett für mindestens zwei unterschiedliche zweite Zielobjekte in den Zielobjekten der zweiten Klasse spezifiziert ist.

7. Verfahren nach Anspruch 1, wobei das Verfahren vor dem erneuten Durchführen eines Modelltrainings an dem ersten Zielidentifikationsmodell gemäß dem Zielbild, das jedem Zielobjekt entspricht, und dem Identifikationsetikett, das jedem Zielobjekt entspricht, ferner umfasst:
Erfassen, ob eine Gesamtzahl von Identifikationsetiketten, die innerhalb einer spezifizierten historischen Zeitperiode erhalten werden, größer oder gleich einem voreingestellten Schwellenwert ist; wenn die Gesamtzahl von Identifikationsetiketten, die innerhalb der spezifizierten historischen Zeitperiode erhalten werden, größer oder gleich dem voreingestellten Schwellenwert ist, Fortsetzen des erneuten Durchführens eines Modelltrainings an dem ersten Zielidentifikationsmodell gemäß dem Zielbild, das jedem Zielobjekt entspricht, und dem Identifikationsetikett, das jedem Zielobjekt entspricht; wobei sich die spezifizierte historische Zeitperiode auf eine Zeitperiode mit einer spezifizierten Zeitdauer bezieht, die durch einen aktuellen Zeitpunkt verstrichen ist.

8. Zielidentifikationsvorrichtung (400), **dadurch gekennzeichnet, dass** sie Folgendes umfasst:
eine anfängliche Identifikationseinheit (401), die eingerichtet ist, gemäß einem erhaltenen anfänglichen Identifikationsergebnis jedes Zielobjekts und einer konfigurierten Etikettenidentifikationsstrategie, ein Identifikationsetikett zu bestimmen, das jedem Zielobjekt entspricht; wobei das anfängliche Identifikationsergebnis des Zielobjekts durch Eingabe eines Zielbilds, das dem Zielobjekt entspricht, in ein trainiertes erstes Zielidentifikationsmodell erhalten wird, und das Identifikationsetikett, das dem Zielobjekt entspricht, dem anfänglichen Identifikationsergebnis des Zielobjekts zugeordnet ist; und
eine Modellaktualisierungseinheit (402), die eingerichtet ist, gemäß dem Zielbild, das jedem Zielobjekt entspricht, und dem Identifikationsetikett, das jedem Zielobjekt entspricht, ein Modelltraining an dem ersten Zielidentifikationsmodell erneut durchzuführen, um ein zweites Zielidentifikationsmodell zu erhalten, und wenn das zweite Zielidentifikationsmodell einen voreingestellten Leistungstest besteht, das erste Zielidentifikationsmodell auf das zweite Zielidentifikationsmodell zu aktualisieren, um eine Zielidentifikation unter Verwendung des aktualisierten zweiten Zielidentifikationsmodells durchzuführen;
wobei gemäß dem erhaltenen anfänglichen Identifikationsergebnis jedes Zielobjekts und der konfigurierten Etikettenidentifikationsstrategie das Bestimmen des Identifikationsetiketts, das jedem Zielobjekt entspricht, umfasst:
für jedes Zielobjekt,
unter Verwendung der konfigurierten Etikettenidentifikationsstrategie, Bestimmen eines Zielidentifikationsergebnisses des Zielobjekts; und
wenn das anfängliche Identifikationsergebnis des Zielobjekts mit dem Zielidentifikationsergebnis des Zielobjekts übereinstimmt, Bestimmen des anfänglichen Identifikationsergebnisses als genau und Bestimmen des anfänglichen Identifikationsergebnisses oder des Zielidentifikationsergebnisses des Zielobjekts als ein Identifikationsetikett, das dem Zielobjekt entspricht, und andernfalls Bestimmen des anfänglichen Identifikationsergebnisses als ungenau und Bestimmen des Zielidentifikationsergebnisses des Zielobjekts als das Identifikationsetikett, das dem Zielobjekt entspricht;
wobei die konfigurierte Etikettenidentifikationsstrategie einen der folgenden Schritte umfasst:
Bestimmen des Zielidentifikationsergebnisses des Zielobjekts basierend auf einem Verfolgungsergebnis des Zielobjekts,
Bestimmen des Zielidentifikationsergebnisses des Zielobjekts basierend auf Identifikationsergebnissen anderer spezifizierter Modelle,
Bestimmen des Zielidentifikationsergebnisses des Zielobjekts basierend auf einer Clusteringweise; oder
Bestimmen des Zielidentifikationsergebnisses des Zielobjekts basierend auf einer Ähnlichkeit zwischen den Zielbildern.

9. Vorrichtung nach Anspruch 8, wobei unter Verwendung der konfigurierten Etikettenidentifikationsstrategie das Bestimmen des Zielidentifikationsergebnisses des Zielobjekts umfasst:
Erhalten eines Verfolgungsergebnisses des Zielobjekts, wobei das Verfolgungsergebnis Bewegungsinformationen des Zielobjekts umfasst; und
gemäß den Bewegungsinformationen des Zielobjekts in dem Verfolgungsergebnis, Bestimmen des Zielidentifikationsergebnisses des Zielobjekts, oder
wobei unter Verwendung der konfigurierten Etikettenidentifikationsstrategie das Bestimmen des Zielidentifikationsergebnisses des Zielobjekts umfasst:
Durchführen einer Identifikation für das Zielobjekt unter Verwendung mindestens eines trainierten spezifizierten Modells, um mindestens ein Referenzidentifikationsergebnis zu erhalten; und
Bestimmen eines von allen erhaltenen mindestens einen Referenzidentifikationsergebnissen als das Zielidentifikationsergebnis des Zielobjekts, wobei das eine von allen erhaltenen mindestens einen Referenzidentifikationsergebnissen einen größten Anteil in allen erhaltenen mindestens einen Referenzidentifikationsergebnissen aufweist.

10. Vorrichtung nach Anspruch 8, wobei für jedes Zielobjekt unter Verwendung der konfigurierten Etikettenidentifikationsstrategie das Bestimmen des Zielidentifikationsergebnisses des Zielobjekts umfasst:
basierend auf einer voreingestellten Clusteringweise, Durchführen eines Clustering für jedes Zielobjekt; für jedes erste Zielobjekt in jeder Klasse, Bestimmen eines spezifizierten Etiketts eines zweiten Zielobjekts in der Klasse als ein Zielidentifikationsergebnis des ersten Zielobjekts; wobei das erste Zielobjekt ein Objekt ohne ein spezifiziertes Etikett ist; das zweite Zielobjekt ein Objekt mit einem spezifizierten Etikett ist und ein gleiches Etikett für verschiedene zweite Zielobjekte in einer gleichen Klasse spezifiziert ist.

11. Vorrichtung nach Anspruch 8, wobei für jedes Zielobjekt unter Verwendung der konfigurierten Etikettenidentifikationsstrategie das Bestimmen des Zielidentifikationsergebnisses des Zielobjekts umfasst:
Aufteilen aller Zielobjekte in Zielobjekte der ersten Klasse und Zielobjekte der zweiten Klasse; wobei die Zielobjekte der ersten Klasse mindestens ein erstes Zielobjekt umfassen, das ein Objekt ohne ein spezifiziertes Etikett ist; die Zielobjekte der zweiten Klasse mindestens ein zweites Zielobjekt umfassen, das ein Objekt mit einem spezifizierten Etikett ist; und
für jedes erste Zielobjekt, Bestimmen einer Ähnlichkeit zwischen dem ersten Zielobjekt und jedem des mindestens einen zweiten Zielobjekts in den Zielobjekten der zweiten Klasse, und basierend auf der Ähnlichkeit zwischen dem ersten Zielobjekt und jedem des mindestens einen zweiten Zielobjekts in den Zielobjekten der zweiten Klasse, Auswählen eines spezifizierten Etiketts eines des mindestens einen zweiten Zielobjekts als ein Zielidentifikationsergebnis des ersten Zielobjekts.

12. Vorrichtung nach Anspruch 11, wobei die Zielobjekte der zweiten Klasse mindestens eine Mehrzahl von zweiten Zielobjekten umfassen,
wobei unterschiedliche Etiketten für mindestens zwei unterschiedliche zweite Zielobjekte in den Zielobjekten der zweiten Klasse spezifiziert sind, und/oder ein gleiches Etikett für mindestens zwei unterschiedliche zweite Zielobjekte in den Zielobjekten der zweiten Klasse spezifiziert ist.

13. Vorrichtung nach Anspruch 8, wobei vor der Verwendung zum erneuten Durchführen eines Modelltrainings an dem ersten Zielidentifikationsmodell gemäß dem Zielbild, das jedem Zielobjekt entspricht, und dem Identifikationsetikett, das jedem Zielobjekt entspricht, die anfängliche Identifikationseinheit ferner eingerichtet ist:
zu erfassen, ob eine Gesamtzahl von Identifikationsetiketten, die innerhalb einer spezifizierten historischen Zeitperiode erhalten werden, größer oder gleich einem voreingestellten Schwellenwert ist; wenn die Gesamtzahl von Identifikationsetiketten, die innerhalb der spezifizierten historischen Zeitperiode erhalten werden, größer oder gleich dem voreingestellten Schwellenwert ist, das erneute Durchführen eines Modelltrainings an dem ersten Zielidentifikationsmodell gemäß dem Zielbild, das jedem Zielobjekt entspricht, und dem Identifikationsetikett, das jedem Zielobjekt entspricht, fortzusetzen; wobei sich die spezifizierte historische Zeitperiode auf eine Zeitperiode mit einer spezifizierten Zeitdauer bezieht, die durch einen aktuellen Zeitpunkt verstrichen ist.

## Revendications

1. Procédé d'identification de cible, **caractérisé en ce qu'**il comprend :
selon un résultat d'identification initial obtenu de chaque objet cible et une stratégie d'identification d'étiquette configurée, la détermination (S101), par un dispositif électronique, d'une étiquette d'identification correspondant à chaque objet cible ; dans lequel le résultat d'identification initial de l'objet cible est obtenu en entrant une image cible correspondant à l'objet cible dans un premier modèle d'identification cible entraîné, et l'étiquette d'identification correspondant à l'objet cible est associée au résultat d'identification initial de l'objet cible ;
selon l'image cible correspondant à chaque objet cible et l'étiquette d'identification correspondant à chaque objet cible, la réexécution (S102), par le dispositif électronique, d'un entraînement de modèle sur le premier modèle d'identification cible pour obtenir un second modèle d'identification cible, et lorsque le second modèle d'identification cible réussit un test de performance prédéfini, la mise à jour du premier modèle d'identification cible au second modèle d'identification cible pour effectuer une identification cible en utilisant le second modèle d'identification cible mis à jour ;
dans lequel selon le résultat d'identification initial obtenu de chaque objet cible et la stratégie d'identification d'étiquette configurée, la détermination de l'étiquette d'identification correspondant à chaque objet cible comprend :
pour chaque objet cible, en utilisant la stratégie d'identification d'étiquette configurée, la détermination (S201) d'un résultat d'identification cible de l'objet cible ; et
lorsque le résultat d'identification initial de l'objet cible correspond au résultat d'identification cible de l'objet cible, la détermination du résultat d'identification initial comme étant précis et la détermination (S202) du résultat d'identification initial ou du résultat d'identification cible de l'objet cible en tant qu'étiquette d'identification correspondant à l'objet cible, et sinon, la détermination du résultat d'identification initial comme étant imprécis et la détermination du résultat d'identification cible de l'objet cible en tant qu'étiquette d'identification correspondant à l'objet cible ;
dans lequel la stratégie d'identification d'étiquette configurée comprend l'une quelconque parmi :
la détermination du résultat d'identification cible de l'objet cible sur la base d'un résultat de suivi de l'objet cible,
la détermination du résultat d'identification cible de l'objet cible sur la base de résultats d'identification d'autres modèles spécifiés,
la détermination du résultat d'identification cible de l'objet cible sur la base d'une manière de regroupement ; ou
la détermination du résultat d'identification cible de l'objet cible sur la base d'une similarité entre les images cibles.

2. Procédé selon la revendication 1, dans lequel en utilisant la stratégie d'identification d'étiquette configurée, la détermination du résultat d'identification cible de l'objet cible comprend :
l'obtention d'un résultat de suivi de l'objet cible, dans lequel le résultat de suivi comprend des informations de mouvement de l'objet cible ; et
selon les informations de mouvement de l'objet cible dans le résultat de suivi, la détermination du résultat d'identification cible de l'objet cible.

3. Procédé selon la revendication 1, dans lequel en utilisant la stratégie d'identification d'étiquette configurée, la détermination du résultat d'identification cible de l'objet cible comprend :
l'exécution d'une identification pour l'objet cible en utilisant au moins un modèle spécifié entraîné pour obtenir au moins un résultat d'identification de référence ; et
la détermination de l'un de l'ensemble de l'au moins un résultat d'identification de référence obtenu en tant que résultat d'identification cible de l'objet cible, dans lequel l'un de l'ensemble de l'au moins un résultat d'identification de référence obtenu a une proportion la plus grande dans l'ensemble de l'au moins un résultat d'identification de référence obtenu.

4. Procédé selon la revendication 1, dans lequel pour chaque objet cible, en utilisant la stratégie d'identification d'étiquette configurée, la détermination du résultat d'identification cible de l'objet cible comprend :
sur la base d'une manière de regroupement prédéfinie, l'exécution d'un regroupement pour chaque objet cible ; pour chaque premier objet cible dans chaque classe, la détermination d'une étiquette spécifiée d'un second objet cible dans la classe en tant que résultat d'identification cible du premier objet cible ; dans lequel le premier objet cible est un objet sans étiquette spécifiée ; le second objet cible est un objet avec une étiquette spécifiée, et une même étiquette est spécifiée pour différents seconds objets cibles dans une même classe.

5. Procédé selon la revendication 1, dans lequel pour chaque objet cible, en utilisant la stratégie d'identification d'étiquette configurée, la détermination du résultat d'identification cible de l'objet cible comprend :
la division de tous les objets cibles en objets cibles de première classe et en objets cibles de seconde classe ; dans lequel les objets cibles de première classe comprennent au moins un premier objet cible qui est un objet sans étiquette spécifiée ; les objets cibles de seconde classe comprennent au moins un second objet cible qui est un objet avec une étiquette spécifiée ; et
pour chaque premier objet cible, la détermination d'une similarité entre le premier objet cible et chacun de l'au moins un second objet cible dans les objets cibles de seconde classe, et sur la base de la similarité entre le premier objet cible et chacun de l'au moins un second objet cible dans les objets cibles de seconde classe, la sélection d'une étiquette spécifiée de l'un de l'au moins un second objet cible en tant que résultat d'identification cible du premier objet cible.

6. Procédé selon la revendication 5, dans lequel les objets cibles de seconde classe comprennent au moins une pluralité de seconds objets cibles,
dans lequel différentes étiquettes sont spécifiées pour au moins deux seconds objets cibles différents dans les objets cibles de seconde classe, et/ou, une même étiquette est spécifiée pour au moins deux seconds objets cibles différents dans les objets cibles de seconde classe.

7. Procédé selon la revendication 1, dans lequel avant, selon l'image cible correspondant à chaque objet cible et l'étiquette d'identification correspondant à chaque objet cible, la réexécution d'un entraînement de modèle sur le premier modèle d'identification cible, le procédé comprend en outre :
la détection si un nombre total d'étiquettes d'identification obtenues dans une période de temps historique spécifiée est supérieur ou égal à un seuil prédéfini ; si le nombre total d'étiquettes d'identification obtenues dans la période de temps historique spécifiée est supérieur ou égal au seuil prédéfini, la poursuite de la réexécution d'un entraînement de modèle sur le premier modèle d'identification cible selon l'image cible correspondant à chaque objet cible et l'étiquette d'identification correspondant à chaque objet cible ; dans lequel la période de temps historique spécifiée se réfère à une période de temps avec une longueur de temps spécifiée écoulée avant un point de temps actuel.

8. Appareil d'identification de cible (400), **caractérisé en ce qu'**il comprend :
une unité d'identification initiale (401), configurée pour, selon un résultat d'identification initial obtenu de chaque objet cible et une stratégie d'identification d'étiquette configurée, déterminer une étiquette d'identification correspondant à chaque objet cible ; dans lequel le résultat d'identification initial de l'objet cible est obtenu en entrant une image cible correspondant à l'objet cible dans un premier modèle d'identification cible entraîné, et l'étiquette d'identification correspondant à l'objet cible est associée au résultat d'identification initial de l'objet cible ; et
une unité de mise à jour de modèle (402), configurée pour, selon l'image cible correspondant à chaque objet cible et l'étiquette d'identification correspondant à chaque objet cible, réexécuter un entraînement de modèle sur le premier modèle d'identification cible pour obtenir un second modèle d'identification cible, et lorsque le second modèle d'identification cible réussit un test de performance prédéfini, mettre à jour le premier modèle d'identification cible au second modèle d'identification cible pour effectuer une identification cible en utilisant le second modèle d'identification cible mis à jour ;
dans lequel selon le résultat d'identification initial obtenu de chaque objet cible et la stratégie d'identification d'étiquette configurée, la détermination de l'étiquette d'identification correspondant à chaque objet cible comprend :
pour chaque objet cible,
en utilisant la stratégie d'identification d'étiquette configurée, la détermination d'un résultat d'identification cible de l'objet cible ; et
lorsque le résultat d'identification initial de l'objet cible correspond au résultat d'identification cible de l'objet cible, la détermination du résultat d'identification initial comme étant précis et la détermination du résultat d'identification initial ou du résultat d'identification cible de l'objet cible en tant qu'étiquette d'identification correspondant à l'objet cible, et sinon, la détermination du résultat d'identification initial comme étant imprécis et la détermination du résultat d'identification cible de l'objet cible en tant qu'étiquette d'identification correspondant à l'objet cible ;
dans lequel la stratégie d'identification d'étiquette configurée comprend l'une quelconque parmi :
la détermination du résultat d'identification cible de l'objet cible sur la base d'un résultat de suivi de l'objet cible,
la détermination du résultat d'identification cible de l'objet cible sur la base de résultats d'identification d'autres modèles spécifiés,
la détermination du résultat d'identification cible de l'objet cible sur la base d'une manière de regroupement ; ou
la détermination du résultat d'identification cible de l'objet cible sur la base d'une similarité entre les images cibles.

9. Appareil selon la revendication 8, dans lequel en utilisant la stratégie d'identification d'étiquette configurée, la détermination du résultat d'identification cible de l'objet cible comprend :
l'obtention d'un résultat de suivi de l'objet cible, dans lequel le résultat de suivi comprend des informations de mouvement de l'objet cible ; et
selon les informations de mouvement de l'objet cible dans le résultat de suivi, la détermination du résultat d'identification cible de l'objet cible, ou
dans lequel en utilisant la stratégie d'identification d'étiquette configurée, la détermination du résultat d'identification cible de l'objet cible comprend :
l'exécution d'une identification pour l'objet cible en utilisant au moins un modèle spécifié entraîné pour obtenir au moins un résultat d'identification de référence ; et
la détermination de l'un de l'ensemble de l'au moins un résultat d'identification de référence obtenu en tant que résultat d'identification cible de l'objet cible, dans lequel l'un de l'ensemble de l'au moins un résultat d'identification de référence obtenu a une proportion la plus grande dans l'ensemble de l'au moins un résultat d'identification de référence obtenu.

10. Appareil selon la revendication 8, dans lequel pour chaque objet cible, en utilisant la stratégie d'identification d'étiquette configurée, la détermination du résultat d'identification cible de l'objet cible comprend :
sur la base d'une manière de regroupement prédéfinie, l'exécution d'un regroupement pour chaque objet cible ; pour chaque premier objet cible dans chaque classe, la détermination d'une étiquette spécifiée d'un second objet cible dans la classe en tant que résultat d'identification cible du premier objet cible ; dans lequel le premier objet cible est un objet sans étiquette spécifiée ; le second objet cible est un objet avec une étiquette spécifiée, et une même étiquette est spécifiée pour différents seconds objets cibles dans une même classe.

11. Appareil selon la revendication 8, dans lequel pour chaque objet cible, en utilisant la stratégie d'identification d'étiquette configurée, la détermination du résultat d'identification cible de l'objet cible comprend :
la division de tous les objets cibles en objets cibles de première classe et en objets cibles de seconde classe ; dans lequel les objets cibles de première classe comprennent au moins un premier objet cible qui est un objet sans étiquette spécifiée ; les objets cibles de seconde classe comprennent au moins un second objet cible qui est un objet avec une étiquette spécifiée ; et
pour chaque premier objet cible, la détermination d'une similarité entre le premier objet cible et chacun de l'au moins un second objet cible dans les objets cibles de seconde classe, et sur la base de la similarité entre le premier objet cible et chacun de l'au moins un second objet cible dans les objets cibles de seconde classe, la sélection d'une étiquette spécifiée de l'un de l'au moins un second objet cible en tant que résultat d'identification cible du premier objet cible.

12. Appareil selon la revendication 11, dans lequel les objets cibles de seconde classe comprennent au moins une pluralité de seconds objets cibles,
dans lequel différentes étiquettes sont spécifiées pour au moins deux seconds objets cibles différents dans les objets cibles de seconde classe, et/ou, une même étiquette est spécifiée pour au moins deux seconds objets cibles différents dans les objets cibles de seconde classe.

13. Appareil selon la revendication 8, dans lequel avant d'être utilisée pour réexécuter un entraînement de modèle sur le premier modèle d'identification cible selon l'image cible correspondant à chaque objet cible et l'étiquette d'identification correspondant à chaque objet cible, l'unité d'identification initiale est en outre configurée pour :
détecter si un nombre total d'étiquettes d'identification obtenues dans une période de temps historique spécifiée est supérieur ou égal à un seuil prédéfini ; si le nombre total d'étiquettes d'identification obtenues dans la période de temps historique spécifiée est supérieur ou égal au seuil prédéfini, poursuivre la réexécution d'un entraînement de modèle sur le premier modèle d'identification cible selon l'image cible correspondant à chaque objet cible et l'étiquette d'identification correspondant à chaque objet cible ; dans lequel la période de temps historique spécifiée se réfère à une période de temps avec une longueur de temps spécifiée écoulée avant un point de temps actuel.
